# EUROPEAN PATENT SPECIFICATION

(11) **EP 3 077 443 B1**
(45) Date of publication and mention of the grant of the patent: **17.04.2019**
(21) Application number: 14830874.5
(22) Date of filing: 04.12.2014
(51) Int. Cl.: B44C 1/175, C09D 179/02, C08G 73/02

(54) **BINDER COMPOSITION FOR DECAL**
BINDEMITTELZUSAMMENSETZUNG FÜR AUFKLEBER
COMPOSITION DE LIANT POUR DÉCALCOMANIE

(30) Priority: 05.12.2013 DE 102013020376
(43) Date of publication of application: 12.10.2016
(73) Proprietor: Cabro S.p.A., 52100 Arezzo (IT)
(72) Inventor: BETTI, Francesca, I-52100 Arezzo (IT); LANDGRAF, Günter, 63454 Hanau (DE)
(74) Representative: Mangini, Simone
(86) International application number: PCT/IB2014/066604
(87) International publication number: WO 2015/083123

(56) References cited:
- EP-A1- 2 199 344
- GB-A- 819 104
- GB-A- 909 494
- GB-A- 941 997
- US-A1- 2005 153 144
- US-A1- 2008 132 671
- DATABASE WPI Week 197540 Thomson Scientific, London, GB; AN 1975-66392W XP002737422, -& JP S50 80392 A (SHOWA DENKO KK) 30 June 1975 (1975-06-30)

## Description

### FIELD OF THE INVENTION

The present invention relates to a method for preparing a binder composition, to a binder composition, to a formulation for decals and for uses of the binder composition.

The present invention also relates to a decal.

### BACKGROUND OF THE INVENTION

Colors containing noble metals for decorating glass and ceramic have been described in detail in the article by G. Landgraf in "Gold: Progress in Chemistry Biochemistry and Technology", Edited by Hubert Schmidbaur, 1999, John Wiley & Sons Ltd. Further articles relating to this subject can be found in L.B. Hunt, Gold Bull. 12, (1979), 116 or G. Paret and G. Landgraf, Handbuch der Keramik, Gr. IG3 (1981).

Precious metal formulations, both in liquid form and in paste form, have been used for many years to decorate different types of substrate, such as glass, ceramic, porcelain, tiles and other silicate-based substrates. These preparations generally contain one or more organic compounds of precious metals that are substantially soluble in an organic medium: typical organic compounds of precious metals include resinates, in particular sulphoresinates. Moreover, these preparations contain one or more solutions of organometallic compounds such as resinates, carboxylates and alkoxides of elements such as Rh, Bi, Cr, V, Ni, Co, Fe, Sn, Zr, Ta, Si, B, Al that influence the formation and adhesion of the film to the substrate. The rest of the formulation is represented by a combination of at least one solvent and one binder.

Precious metal formulations can be applied to a substrate using numerous technologies, for example by hand using a brush, by neoprene printing or by pad printing. Among these methods, the application using screen printing processes, in particular indirect screen printing processes (also called decalcomania), is undoubtedly very interesting.

In the application of decals, a decorative layer comprising a precious metal formulation is applied directly to a decal backing sheet, in particular a paper provided with a water soluble coating, such as carboxymethyl cellulose.

Precious metal formulations for application by means of indirect screen printing should contain a binder suitable to provide the preparation with some special properties. Firstly, after printing the decal on paper, the decorative layer should have acceptable drying times (less than 2 hours) to allow rapid application of the coating. However, it should be noted that it is preferable for drying not to take place too quickly, as in this case there might not be sufficient time to transfer the precious metal formulations onto the decalcomania paper. Moreover, the decorative layer must not dissolve in water, so that after being wetted with water it separates from the backing sheet without being damaged. Moreover, the decorative layer must be characterised by a high level of flexibility in order to be applied to substrates that must be fired without damaging the decoration.

However, in many of the formulations currently available the properties indicated above are not satisfactory.

The use of polyaminoamides has been proposed in several cases. According to patent literature, both non-reactive polyamides and reactive polyamides can be used to produce bright noble metal pastes.

According to the document EP 0972793 A2, the binders preferred for noble metal pastes are polyamide resins, mixed with a plurality of other resins. Nonetheless, the bright noble metal pastes produced with these polyamide resins have some unfavourable properties.

In fact, polyamide resins with a higher molecular weight are often incompatible with the gold sulphoresinates and the solvents used to produce noble metal pastes, which leads to dulling of the fired gold decoration.

Often, the pastes are not sufficiently elastic, causing small cracks to form during transfer, when the decals are subject to significant stretching.

The stability of the decals during storage is insufficient, as over time embrittlement can occur, also causing cracks to form.

Often the bright noble metal pastes do not adhere optimally to the transfer varnish and, consequently, parts of the gold preparation can become detached during transfer.

To eliminate these drawbacks, the document EP 1559693 proposes the use of reactive polyamides (polyaminoamides) as binder in noble metal pastes for direct or indirect screen printing. As a rule, these binders are employed as hardeners for epoxy resins in the paint industry, but in this case are used as the only binder. This patent describes in particular how polyamides that can be obtained from a condensation reaction between a polymer fatty acid and a polyethylene polyamine are preferred. These are characterised by free amino groups in the main chain. More specifically, the invention is expressly limited to polyamine acids produced by polyethylene polyamines.

The problems of this type of binder are as follows. Binders can be in liquid or glue form and therefore only a part of the products is suitable for the purpose, as the necessary physical drying of the noble metal pastes is not possible if liquid binders are used. A further part of these binders is partly soluble in water, meaning that if the decals are soaked for too long in water there is the risk that the printed noble metal paste will dissolve and, after some time, become detached from the transfer paint. In fact, only high molecular weight reactive polyamides, from viscous to semi-solid, are therefore almost the only ones used. A further problem lies in the high reactivity of the free amine groups, which can lead to uncontrollable gelling reactions of the pastes. To prevent this problem, according to the document EP1559693 B1, the reactive polyamide is "inactivated". Inactivation takes place through reaction with acids, such as acetic acid, propionic acid, ethylhexanoic acid, or with epoxides. The instructions of the inventor suggest the use of a 2- to 5-fold molar excess of inactivators.

Despite these inactivations, it is not always possible to stabilize the noble metal pastes. In the case of prolonged storage and subsequent use, increases in viscosity can occur, making further use impossible as the pastes can no longer be subjected to screen printing.

JP S5080392 A, its WPI summary XP-00273742, discloses that mixtures of dimer acids and dicarboxylic acids and organic polyvalent amines were heated.

US 2008/0132671 discloses amide-containing polymers and also their salts with carboxylic acids, phosphoric esters and sulphuric acids.

EP 2199344 A1 discloses a polyamide composition comprising a polyamide in the form of a homo-polyamide or a statistical copolyamide based on m-xylylene diamine and a diacid in the form of a dimeric fatty acid, and aliphatic or cycloaliphatic diamines and/or aliphatic or cycloaliphatic diacids.

Therefore, an aim of the present invention is to provide a method for preparing a binder composition, a binder composition, a formulation for decals, uses of the binder composition and a decal, all of which solve, at least in part, the problems of the prior art and which are also easy and inexpensive to produce.

### SUMMARY

According to the present invention, there is provided a method for preparing a binder composition, a binder composition, a formulation for decals, uses of the binder composition and a decal as defined in the independent claims below and, preferably, in any one of the claims directly or indirectly dependent on the independent claims.

The term "precious metals" is intended as metals such as platinum, palladium, silver and gold.

### DETAILED DESCRIPTION

In accordance with a first aspect of the invention, there is provided a method for preparing a binder composition for a formulation for decals based on metals, in particular precious metals.

According to the method, at least one polyamine and at least one dicarboxylic acid react to obtain at least one polyaminoamide.

According to some embodiments, the polyamine consists of aromatic or aliphatic diamines (with the exception of polyethylene polyamines).

The polyamine has the formula H₂NCH₂RCH₂NH₂, wherein R is selected in the group consisting of: -Ph-, -CH₂CH₂NHCH₂CH₂-.

The molar ratio between the dicarboxylic acid and the polyamine is from 1.5:1 to 1:4, in particular from 1:1 to 1:2.

Advantageously, the weight ratio between the carboxylic acid and the polyamine is from 2 to 5, in particular from 2.6 to 4.

According to some embodiments, the dicarboxylic acid consists of dimerised fatty acids.

Advantageously, the dicarboxylic acid comprises (prevalently; in particular, is) a carboxylic acid with at least two carboxyl moieties and a number of carbon atoms between 30 and 80 (in particular from 36 to 72). According to some embodiments, the dicarboxylic acid comprises (prevalently; in particular, is) a carboxylic acid with a number of carbon atoms from 30 to 60 (in particular, from 36 to 54). In some specific cases, the dicarboxylic acid has a number of carbon atoms from 30 to 40 (more precisely 36).

The dicarboxylic acid comprises (is) an acid obtained from the polymerization (in particular, dimerisation, trimerisation and/or tetramerisation) of a fatty acid. In particular, it is a polymer of an acid selected in a group consisting of: oleic, linoleic, linolenic (and a combination thereof).

According to specific embodiments, the dicarboxylic acid comprises (prevalently; in particular, is) carboxylic acid with CAS 61788-89-4.

According to specific embodiments, the dicarboxylic acid comprises (prevalently; in particular, is) Pripol 1098.

The polymerization products consist mainly of dimers together with minimum quantities of trimers and tetramers. According to some embodiments, the carboxylic acid is a mixture comprising 75-85% by weight of the dimer component, 15-25% by weight of the trimer and/or tetramer component. These percentages are expressed as percentages by weight of the total weight of the dicarboxylic acid.

According to some embodiments, the method comprises a first mixing step during which the polyamine and the dicarboxylic acid are mixed together; and a second mixing step during which an organic acid, which is monocarboxylic and C₁-C₄, and an organic solvent are added, (so as to obtain the binder composition). In particular, the second mixing step follows the first mixing step.

The first and the second mixing steps can be (partly) simultaneous.

More precisely, the organic acid is acetic acid.

Advantageously, the organic solvent is a polar aprotic solvent. In particular, the organic solvent is selected in the group consisting of: cyclohexanone, cyclohexanol and a combination thereof.

Advantageously, the molar ratio between the dicarboxylic acid and the organic solvent is from 1:5 to 1:10 (in particular 1:7) .

The molar ratio between the organic acid and the amine is from 1:0.8 to 1:1.5.

According to advantageous embodiments, the method comprises an addition step, during which an epoxy resin is added (and mixed) (to the preceding combination).

In particular, the addition step follows the first mixing step and precedes the second mixing step. More precisely, during the addition step the epoxy resin is mixed together with the other components.

In accordance with some variants, the epoxy resin can be combined with the polyamine and the dicarboxylic resin before they react.

According to some embodiments, the epoxy resin is based on bisphenol A.

In particular, the epoxy resin is selected in the group consisting of: GT 7072 (Huntsman), GY 298 (Huntsman), GY 253 (Huntsman), YD 128 (Kukdo), YD 017 (Kukdo), YD172 (Kukdo), GT 7071 (Huntsman).

Advantageously, the weight of the dicarboxylic acid is from 32% to 42% (in particular, from 35% to 40%; more precisely, from 36% to 39%) by weight with respect to the total weight of the binder composition; the weight of the polyamine is from 7% to 16% (in particular, from 8% to 15%) by weight with respect to the total weight of the binder composition; the weight of the epoxy resin is from 1% to 3% (in particular, 2%) by weight with respect to the total weight of the binder composition; the weight of the organic acid is from 2% to 7% (in particular, from 3% to 6%; more precisely, from 4% to 5%) by weight with respect to the total weight of the binder composition; the weight of the organic solvent is from 35% to 55% (in particular, from 40% to 50%) by weight with respect to the total weight of the binder composition.

Advantageously, the addition step is carried out at a temperature from 100°C to 200°C. In particular, after the first mixing step, the temperature is decreased to below 150°C (in particular, above 100°C), the epoxy resin is then added and the temperature is then increased to above 160°C (in particular, below 180°C) until the epoxy resin dissolves.

Advantageously, the first mixing step is carried out at a temperature from 170°C to 30°C for a time from 45 min to 1 hour and 15 min. In addition or alternatively, the second mixing step is carried out at a temperature from 100°C to 140°C for a time from 10 to 30 minutes.

According to some embodiments, after the addition step the temperature is decreased to below a temperature from 100°C to 140°C and the organic acid and the organic solvent are then added.

According to specific embodiments, the polyamine has the formula H₂NCH₂PhCH₂NH₂. Advantageously, in these cases, the molar ratio between the dicarboxylic acid and the polyamine is from 1:2.5 to 1:1.5.

Advantageously, in these cases, the weight of the dicarboxylic acid is from 37% to 39% (in particular, from 38% to 39%) by weight with respect to the total weight of the binder composition; the weight of the polyamine is from 13% to 16% (in particular, from 14% to 15%) by weight with respect to the total weight of the binder composition; the weight of the epoxy resin is from 1% to 3% (in particular 2%) by weight with respect to the total weight of the binder composition; the weight of the organic acid is from 3% to 6% (more precisely, from 4% to 5%) by weight with respect to the total weight of the binder composition; the weight of the organic solvent is from 35% to 45% (in particular, from 39% to 44%) by weight with respect to the total weight of the binder composition.

According to specific embodiments, the polyamine has the formula H₂NCH₂CH₂CH₂NHCH₂CH₂CH₂NH₂. Advantageously, in these cases, the molar ratio between the dicarboxylic acid and the polyamine is from 1:1.2 to 1.3:1.

Advantageously, in these cases, the weight of the dicarboxylic acid is from 35% to 38% (in particular, from 36% to 37%) by weight with respect to the total weight of the binder composition; the weight of the amine is from 8% to 11% (in particular, from 9% to 10%) by weight with respect to the total weight of the binder composition; the weight of the epoxy resin is from 1% to 3% (in particular 2%) by weight with respect to the total weight of the binder composition; the weight of the organic acid is from 3% to 6% (more precisely, from 4% to 5%) by weight with respect to the total weight of the binder composition; the weight of the organic solvent is from 43% to 53% (in particular, from 45% to 51%) by weight with respect to the total weight of the binder composition.

In accordance with a second aspect of the present invention, there is provided a binder composition obtainable (in particular, obtained) with the method of the first aspect of the present invention.

The binder composition in accordance with the third aspect is used for preparing a formulation based on (precious) metals for decals.

In accordance with a third aspect of the present invention, there is provided a formulation for decals based on metals (in particular precious metals) comprising a binder composition according to the second aspect of the present invention.

The binder composition in accordance with the second aspect is used for preparing a formulation based on precious metals for decals.

In accordance with the third aspect of the present invention, there is provided a formulation for decals comprising the binder composition in accordance with the second aspect of the present invention. More precisely, the formulation for decals comprises from 17% to 27% (in particular, from 20% to 25%) by weight, with respect to the total weight of the formulation for decals, of the binder composition.

According to some embodiments, the formulation for decals comprises a second binder. More precisely, the formulation for decals comprises from 7% to 13% (in particular, from 8% to 12%), by weight, with respect to the total weight of the formulation for decals, of the second binder. According to some embodiments, the second binder comprises (is) a solution of rosin (in particular, in spike oil).

In particular, the formulation also comprises at least one organic compound comprising a precious metal. In some cases, the formulation comprises at least two organic compounds comprising a precious metal. According to some embodiments, the (each) organic compound comprises (more precisely, is) a sulphoresinate of a precious metal. Alternatively or in addition, the (each) organic compound comprises a precious metal selected from gold and silver.

In particular, the organic compound comprising a precious metal is selected in the group consisting of: gold sulphoresinate, silver sulphoresinate (and a combination thereof).

Advantageously, the content of the organic compound comprising a precious metal (or the sum of the contents of the organic compounds comprising a precious metal) in the formulation for decals is such that the percentage by weight of the precious metal/s is at least 9% (in particular, up to 15%) with respect to the total weight of the formulation for decals.

According to some embodiments, la formulation for decals comprises at least 6% (in particular, up to 15%) by weight with respect to the total weight of the formulation for decals of gold. Alternatively or in addition, la formulation for decals comprises at least 1% (in particular, up to 4%) by weight with respect to the total weight of the formulation for decals of silver.

According to some embodiments, the gold sulphoresinate contains around 60% of gold and the silver sulphoresinate around 47% of silver. Alternatively, it is also possible to use sulphoresinates that contain different percentages of precious metal. For example, solutions of gold sulphoresinate with concentrations of 30%, 40% or 45% of gold and solutions of silver sulphoresinate with concentrations of 20% or 25% of silver are commercially available.

The organic compounds comprising a precious metal allow the characteristic visual effect (in particular, colour and brightness) to be obtained on the decoration.

According to alternative embodiments, instead of organic compounds comprising a precious metal, organic compounds containing other metals (such as Fe, Mn, Co etc.) can be used. In these cases different visual effects will be obtained.

Advantageously, the formulation for decals also comprises a compound of a non precious metal selected in the group consisting of: resinate, carboxylate, alkoxide (and a combination thereof). According to some specific embodiments, the compound of non precious metal is a resinate of a non precious metal or a mixture of resinates of non precious metals.

In particular, the non precious metal is selected in the group consisting of: elements such as Ru, Os, Rh, Bi, Cr, V, Ni, Co, Fe, Sn, Zr, Ta, Si, B, Al (and a combination thereof).

In particular, the resinate is selected in the group consisting of: rhodium resinate, chromium resinate, silicon resinate, bismuth resinate, ruthenium resinate, osmium resinate, vanadium resinate (and a combination thereof).

In particular, the carboxylate is selected in the group consisting of: rhodium carboxylate, chromium carboxylate, silicon carboxylate, bismuth carboxylate, ruthenium carboxylate, osmium carboxylate, vanadium carboxylate (and a combination thereof).

In particular, the alkoxide is selected in the group consisting of: rhodium alkoxide, chromium alkoxide, silicon alkoxide, bismuth alkoxide, ruthenium alkoxide, osmium alkoxide, vanadium alkoxide (and a combination thereof).

According to some embodiments, the weight of the non precious metal compound (or the sum of the weights of these compounds) is from 2.0% to 8.0% (in particular, from 2.5% to 6%) of the total weight of the formulation for decals.

Advantageously, the formulation for decals also comprises at least one thixotropic agent. According to some embodiments, the formulation comprises from 3% to 4.5% by weight of the thixotropic agent with respect to the total weight of the formulation for decals.

In particular, the thixotropic agent comprises (is) a hydrogenated derivative of castor oil. For example the thixotropic agent is an amide, such as the products sold with the name Flowtone ST and Crayvallac Super (Cray Valley) respectively, or ISCATIX ISP and ISCATIX SR (ISCA), or similar products supplied by Elementis Specialties.

Advantageously, the formulation for decals also comprises at least one anti-foaming agent. According to some embodiments, the formulation comprises from 1% to 2.5% by weight of the anti-foaming agent with respect to the total weight of the formulation for decals.

According to some embodiments, the anti-foaming agent is a silicone based oil, such as the polysiloxane solutions Dynoadd F-404 (Dynea), PAT ADD AF 70 (Patcham), DAPRO DF 5300 (Elementis Specialties), Byk 065 (Byk).

The formulation for decals (according to the third aspect of the present invention) can be used (if necessary, varying the composition slightly) to apply decals both to glass and to ceramic.

In accordance with a fourth aspect of the present invention, there is provided the use of the binder composition in accordance with the third aspect to prepare a formulation based on (precious) metals for decals (more precisely, a formulation based on metals for decals of the third aspect of the present invention).

In particular, the preparation of the formulation for decals provides for a mixing step, during which (substantially at ambient temperature - around 25°C) at least one organic compound comprising a precious metal (according to some embodiments also a non precious metal) is mixed with a further organic solvent and the binder composition in accordance with the second aspect of the present invention.

The further organic solvent is the same as or different from the organic solvent described in relation to the first aspect of the present invention. In particular, the further organic solvent is selected in the group consisting of cyclohexanol, essential pine oil, essential lavender oil, essential eucalyptus oil, essential spike oil (and a combination thereof).

Advantageously, during the mixing step, at least one compound of a non precious metal is mixed together with the organic compounds comprising a precious metal, the solvent and the binder composition.

According to some embodiments, the product obtained during the mixing step is heated (advantageously to a temperature between 65°C and 85°C). Advantageously, it is added (at this latter temperature) to at least one thixotropic agent and then (after having returned the temperature of the mixture more or less to ambient temperature - around 25°C) to at least one anti-foaming agent so as to obtain the formulation for decals.

Advantageously, the organic compound comprising a precious metal and the non precious metal compound are defined, independently of each other, according to the indications of the third aspect of the present invention.

According to some specific embodiments (naturally also with regard to the third aspect of the present invention), the sum of the weights of the binder composition, of the organic compound, of the resinate, of the thixotropic agent, of the anti-foaming agent and of the further organic solvent is at least 95% (in particular, at least 98%; more precisely, at least 99%) of the weight of the formulation for decals.

According to some embodiments, la formulation for decals is then ground to ensure homogeneity.

In accordance with a fifth aspect of the present invention, there is provided a decal for producing a decoration on a substrate, said decal comprising a backing sheet (for example made of paper) and a layer for forming the decoration (and a coating layer).

According to some embodiments, the layer for forming the decoration comprises a binder composition in accordance with the second aspect of the present invention.

Advantageously, the decal is obtained following the use according to the fourth aspect of the present invention.

In particular, the layer for forming the decoration comprises (more precisely, consists of) the formulation for decals according to the third aspect of the present invention.

According to further aspects of the present invention there is also provided the following.

Binder for producing pastes for screen printing to be baked on glass or ceramic, characterised in that it contains a binder (according to one of the following alternatives)
1. that is produced, through a reaction, by a reaction of dimerised fatty acids and aromatic or aliphatic diamines, the dimerised fatty acids and the diamine being provided in a molar ratio between 4:1 and 1:4, preferably between 2:1 and 1:2.
2. that is produced by a reaction of dimerised fatty acids and polyamines, with the exception of polyethylene polyamine, the dimerised fatty acids and the polyamine being provided in a molar ratio between 4:1 and 1:4, preferably between 2:1 and 1:2.
3. that, in addition to the components according to claim 1 and 2, contains, as further reaction partners, an aliphatic or aromatic epoxy resin and/or a monofunctional, bifunctional or multifunctional epoxy monomer.
4. that is produced, through a reaction, by a reaction of dimerised fatty amines, derived from structures of dimerised fatty acids, and bifunctional epoxy resins and/or bifunctional epoxy monomers, the diamine and the epoxide being provided in a molar ratio between 4:1 and 1:4, preferably between 2:1 and 1:2.
5. that, in addition to the components according to claim 4, contains, during polymerization, as reaction partner, also polyamine.
6. that is produced, through a reaction, by a reaction of dimerised fatty amines, derived from structures of dimerised fatty acids, and bifunctional aromatic or aliphatic carboxylic acids, the diamine and the carboxylic acid being provided in a molar ratio between 4:1 and 1:4, preferably between 2:1 and 1:2.
7. that is produced by a reaction of dimerised fatty acids and epoxy resin or bifunctional epoxides, the dimerised fatty acids and the epoxide being provided in a molar ratio between 4:1 and 1:4, preferably between 2:1 and 1:2.
8. Screen printing ink comprising from 2 to 25% of a binder according to claims 1-7 and organic compounds based on noble metals or common metals, such as thiolates, alcoholates or carboxylates of the elements Au, Ag, Pd, Pd, Ru, Ir, Rh, Os, Si, Ti, Al, Bi, Cr, Cu, Fe, Co, In, Ni, Mn, Sn, V, Zn, Zr.
9. Use of one of the binder systems according to points 1-7 to produce pastes for decals containing noble metals for the decorative or functional coating of glass and porcelain.
10. Screen printing ink according to point 8 for producing decorative or functional coatings for glass, ceramic and porcelain with a direct or indirect screen printing process. Further features of the present invention will be apparent from the following description of some examples, provided purely for non-limiting illustrative purposes.

### Example 1

### Production of resins

Some experimental tests were carried out.

List of the polyamines tested:
3 - Methylamine - propylamine (AMINE 1)

   NH₂CH₂CH₂CH₂NHCH₃
M-Xylylenediamine (AMINE 2)

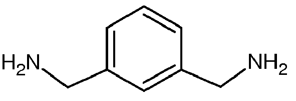

   H₂NCH₂PHCH₂NH₂
Bis(6-aminohexyl)amine (AMINE 3)
Bis-(3-aminopropyl)-amine (AMINE 4)

   H₂N(CH₂)₃NH(CH₂)₃NH₂
Dimer acid used: Pripol 1098
Epoxy resin used: Araldite GY 253

The specific formulations and resin solutions provided in the following examples containing AMINE 1 and AMINE 3 are reference examples and do not form part of the claimed invention.

### Procedure followed

Components 1 and 2 were heated to the temperature of 200°C under good and continuous stirring. This temperature was maintained for one hour. Heating was discontinued in order to reach the temperature of 120°C. Upon reaching this temperature, components 3 and 4 were added. The temperature was maintained for 20 minutes. Cyclohexanone was added in a quantity sufficient to obtain a weight of 100%.

### Formulations tested

a)

| | | |
|---|---|---|
| 1 | Dimer acid | 38.1% |
| 2 | AMINE 1 | 14.3% |
| 3 | Acetic acid | 4.8% |
| 4 | Cyclohexanone | 42.8% |

Comment: after hour at T=200°C the mixture was still a little sticky.
b)

| | | |
|---|---|---|
| 1 | Dimer acid | 38.1% |
| 2 | AMINE 2 | 14.3% |
| 3 | Acetic acid | 4.8% |
| 4 | Cyclohexanone | 42.8% |

Comment: after 50 minutes at T=200°C the mixture became very viscous but not sticky.
c)

| | | |
|---|---|---|
| 1 | Dimer acid | 38.1% |
| 2 | AMINE 3 (solid) | 14.3% |
| 3 | Acetic acid | 4.8% |
| 4 | Cyclohexanone | 42.8% |

Comment: at T = 120°C the amine started to dissolve. At T =150°C the amine had completely dissolved. After 1 hour at T = 200°C the mixture took on the consistency of rubber. The mixture could no longer be processed and was therefore discarded.
d)

| | | |
|---|---|---|
| 1 | Dimer acid | 38.1% |
| 2 | AMINE 4 | 14.3% |
| 3 | Acetic acid | 4.8% |
| 4 | Cyclohexanone | 42.8% |

Comment: after 1 hour at T = 200°C the mixture was no longer sticky.

### Example 2

### Use of the resins produced (example 1) to produce a paste for decals

**Table 1**

| **Components** | **Quantity (%)** |
|---|---|
| Solution of Gold Sulphoresinate (Au 30%) | 31.9 |
| Solution of Silver Sulphoresinate (Ag 20%) | 16.5 |
| Solution of Rhodium Sulphoresinate (Rh 5%) | 1.0 |
| Solution of Chromium Sulphoresinate (Cr 6%) | 1.0 |
| Solution of Si Sulphoresinate (Si 13%) | 0.5 |
| Solution of Bismuth Sulphoresinate (Bi 8%) | 1.0 |
| Rosin in essential spike oil | 10.0 |
| Essential lavender oil | 5.3 |
| Cyclohexanol | 5.3 |
| Resin (#) in cyclohexanone | 22.0 |
| Thixotropic agent | 2.5 |
| Anti-foaming agent | 3.0 |

All the components of the formulations that can be used, with the exception of the thixotropic agent and the anti-foaming agent, were weighed and mixed.

Maintaining each formulation under stirring, it was heated to a temperature of 80°C. After reaching this temperature, the thixotropic agent was added in the quantity indicated in the formulation. Maintaining under good and continuous stirring, heating was discontinued and the formulation was left to cool. Once the formulation reached ambient temperature, the anti-foaming agent was added.

The formulation was maintained under good and continuous stirring for at least 15 minutes.

After the stirring step, the formulation was left for a few hours before proceeding with the grinding step.

The formulations were then printed with a 120 thread nylon fabric on a paper backing, dried and coated with collodion 0693 (Ruger & Guenzel). After the coating is dry, the decoration can be applied to the desired substrate and heat treated. The following instruments were used to apply the decoration to the substrate: a container with water of suitable dimensions to immerse the decal (use demineralised water if possible), a soft and flexible rubber spatula to be used to make the decal adhere to the surface of the substrate selected, a damp cloth, scissors.

For application to the substrate, the part to be transferred was firstly cut out and immersed in water for at least two minutes. After this time, the decal was removed from the water and, holding it between the fingers, the part containing the coating was slid on the paper. The part of the decal containing the coating, projecting in the position selected for application, was placed thereon. Holding the portion with the coating firmly in position, the paper was slid out from underneath until being completely removed. Using the rubber spatula, the water and any air bubbles located under the film with the coating were removed. The substrate was then fired.

Different properties of all the decal pastes produced were analysed in order to establish whether the various resins were suitable for use.

**Table 2**

| **Resin Solution #** | **A** | **B** | **d** |
|---|---|---|---|
| **Production process** | Standard | **Standard** | **Standard** |
| **Printing properties (120 thread nylon frame)** | Printing not homogeneous | Printing homogeneous | Printing homogeneous |
| **Drying time (minutes)** | 120 | **60** | **30** |
| **Dissolution in water (control after 30 minutes)** | Does not dissolve | Does not dissolve | Does not dissolve |
| **Elasticity of the decal (assessed during the application step)** | Good | **Not good** | **Good** |
| **Result of firing (T = 780°C)** | Not bright and very dark | **Bright and yellow** | **Bright but more reddish** |

### Example 3

The following formulations were also tested according to the procedures specified case by case.
e)

| | | |
|---|---|---|
| 1 | Dimer acid | 38.1% |
| 2 | AMINE 3 (solid) | 7.1% |
| 3 | Acetic acid | 4.8% |
| 4 | Cyclohexanone | 50.0% |

Procedure as described in example 1.
Comment: at T = 120°C the amine started to dissolve. At T = 150°C the amine had completely dissolved, After one hour at T = 200°C, the mixture took on the consistency of rubber. The mixture could no longer be processed and was therefore discarded.
f)

| | | |
|---|---|---|
| 1 | Dimer acid | 38.1% |
| 2 | AMINE 3 (solid) | 7.1% |
| 3 | Acetic acid | 4.8% |
| 4 | Cyclohexanone | 50.0% |

For this experiment the procedure was modified as follows. Components 1 and 2 were heated to the temperature of 200°C under good and continuous stirring. This temperature was maintained for 30 minutes. Heating was discontinued in order to reach the temperature of 120°C. Upon reaching this temperature, components 3 and 4 were added. The temperature was maintained for 20 minutes. Cyclohexanone was added in a quantity sufficient to obtain a weight of 100%.

Comment: at T = 120°C the amine started to dissolve. At T = 150°C the amine had completely dissolved. After 30 minutes at T = 200°C the mixture remained liquid. At T = 155°C the mixture was almost solid and it was necessary to add solvent. At T = 105°C the acetic acid was added. After 20 minutes at T = 120°C all the solid had dissolved.
g)

| | | |
|---|---|---|
| 1 | Dimer acid | 36.4% |
| 2 | AMINE 4 | 13.6% |
| 3 | Epoxy resin | 6.4% |
| 4 | Acetic acid | 4.5% |
| 5 | Cyclohexanone | 39.1% |

Procedure: heat components 1 and 2 to T = 200°C. Maintain this temperature for one hour. Discontinue heating in order to reach the temperature of 140°C. After reaching this temperature add component 3. Reheat to the temperature of 170°C until the epoxy resin has completely dissolved. Discontinue heating until reaching the temperature of 120°C. After reaching this temperature add components 4 and 5. Maintain the temperature for 20 minutes. Add cyclohexanone in a quantity sufficient to obtain a weight of 100%.

Comment: after one hour at T = 200°C the mixture was no longer sticky. After adding the component 3, the mixture became solid and could no longer be dissolved by adding cyclohexanone or by adding acid. The resin was discarded.
h)

| | | |
|---|---|---|
| 1 | Dimer acid | 36.4% |
| 2 | AMINE 4 | 13.6% |
| 3 | Epoxy resin | 9.1% |
| 4 | Acetic acid | 4.5%- |
| 5 | Cyclohexanone | 36.4% |

Procedure: heat components 1 and 2 to T = 200°C. Maintain this temperature for 30 minutes. Discontinue heating in order to reach the temperature of 140°C. After reaching this temperature add component 3. Reheat to the temperature of 170°C until the epoxy resin has completely dissolved. Discontinue heating until reaching the temperature of 120°C. After reaching this temperature add components 4 and 5. Maintain the temperature for 20 minutes. Add cyclohexanone in a quantity sufficient to obtain a weight of 100%.

Comment: after one hour at T = 200°C, the mixture was no longer sticky. After adding the component 3, the mixture became solid and could no longer be dissolved by adding cyclohexanone or by adding acid. The resin was discarded.
i)

| | | |
|---|---|---|
| 1 | Dimer acid | 36.4% |
| 2 | AMINE 4 | 13.6% |
| 3 | Epoxy resin | 2.3% |
| 4 | Acetic acid | 4.5% |
| 5 | Cyclohexanone | 43.2% |

Procedure: heat components 1 and 2 to T = 200°C. Maintain this temperature for 30 minutes. Discontinue heating in order to reach the temperature of 140°C. After reaching this temperature add component 3. Reheat to the temperature of 170°C until the epoxy resin has completely dissolved. Discontinue heating until reaching the temperature of 120°C. After reaching this temperature add components 4 and 5. Maintain the temperature for 20 minutes. Add cyclohexanone in a quantity sufficient to obtain a weight of 100%.

Comment: after one hour at T = 200°C the mixture was no longer sticky. After adding component 3, the mixture became solid and a part of the solvent was added. At T = 120°C the acetic acid and the solvent were added. The mixture had completely dissolved after 20 minutes at the temperature of T = 120°C.

### Example 4

### Use of the resins produced (example 3) to produce a decal paste

Following the method described in example 2, the following results were observed

**Table 3**

| **Resin Solution #** | **f** | **I** |
|---|---|---|
| **Production process** | Standard | At T = 55°C the paste had the consistency of a rubber (not suitable) |
| **Printing properties (120 thread nylon frame)** | Printing homogeneous and not sticky | Printing homogeneous but too sticky |
| **Drying time (minutes)** | - | - |
| **Dissolution in (control after 30 minutes)** | Does not dissolve | Does not dissolve |
| **Elasticity of the decal (assessed during the application step)** | Good | Good |
| **Results of firing (T = 780°C)** | Not bright and very dark | Bright and yellow |

| | | |
|---|---|---|
| Resins g and h were too reactive. | | |

### Example 5

The following formulations were tested according to the following procedure: heat components 1 and 2 to the temperature of 200°C under good and continuous stirring. Maintain this temperature for one hour. Discontinue heating in order to reach the temperature of 120°C. Upon reaching this temperature add components 3 and 4. Maintain the temperature for 20 minutes. Add cyclohexanone in a quantity sufficient to obtain a weight of 100%.
l)

| | | |
|---|---|---|
| 1 | Dimer acid | 40.0% |
| 2 | AMINE 1 | 1.8% |
| 3 | Acetic acid | 5.0% |
| 4 | Cyclohexanone | 53.2% |

Comment: after one hour at T = 200°C the mixture was no longer sticky and was still liquid.
m)

| | | |
|---|---|---|
| 1 | Dimer acid | 40.0% |
| 2 | AMINE 2 | 2.7% |
| 3 | Acetic acid | 5.0% |
| 4 | Cyclohexanone | 47.7% |

n)

| | | |
|---|---|---|
| 1 | Dimer acid | 40.0% |
| 2 | AMINE 3 (solid) | 4.3% |
| 3 | Acetic acid | 5.0% |
| 4 | Cyclohexanone | 50.7% |

o)

| | | |
|---|---|---|
| 1 | Dimer acid | 40.0% |
| 2 | AMINE 4 | 2.6% |
| 3 | Acetic acid | 5.0% |
| 4 | Cyclohexanone | 47.6% |

### Example 6

### Use of the resins produced (example 5) to produce a decal paste

Following the method described in example 2 the following results were observed.

**Table 4**

| **Resin solution #** | **l** | **m** | **N** | **o** |
|---|---|---|---|---|
| **Production process** | Standard | Standard | Standard | Standard |
| **Printing properties (120 thread nylon frame)** | Printing homogeneous and not sticky | Printing homogeneous and not sticky | Printing homogeneous and not sticky | Printing homogeneous and not sticky |
| **Drying time (minutes)** | - | - | - | - |
| **Dissolution in water (control after 30 minutes)** | Does not dissolve | Does not dissolve | Does not dissolve | Does not dissolve |
| **Elasticity of the decal (assessed during the application step)** | Good | Good | Good | Good |
| **Results of firing (T = 780°C)** | No adhesion | No adhesion | No adhesion | Not bright and very dark |

These formulations do not ensure a high level of decoration.

### Example 7

The following formulations were also tested according to the procedures specified case by case.
p)

| | | |
|---|---|---|
| 1 | Dimer acid | 40.0% |
| 2 | AMINE 4 | 10.0% |
| 3 | Acetic acid | 5.0% |
| 4 | Cyclohexanone | 45.0% |

Procedure: heat components 1 and 2 to the temperature of 200°C under good and continuous stirring. Maintain this temperature for one hour. Discontinue heating in order to reach the temperature of 120°C. Upon reaching this temperature add components 3 and 4. Maintain the temperature for 20 minutes. Add cyclohexanone in a quantity sufficient to obtain a weight of 100%.

Comment: after 30 minutes at T = 200°C the mixture was no longer sticky. At T = 160°C it was necessary to add a part of the solvent as the paste was too viscous and it was no longer possible to continue stirring.
q)

| | | |
|---|---|---|
| 1 | Dimer acid | 36.4% |
| 2 | AMINE 4 | 13.6% |
| 3 | Epoxy resin | 1.4% |
| 4 | Acetic acid | 4.5% |
| 5 | Cyclohexanone | 44.1% |

Procedure: heat components 1 and 2 to the temperature of 200°C under good and continuous stirring. Maintain this temperature for one hour. Discontinue heating in order to reach the temperature of 140°C. Upon reaching this temperature add component 3. Re-heat to the temperature of 170°C until complete dissolution of the epoxy resin. Discontinue heating in order to reach the temperature of 120°C. Upon reaching this temperature add components 4 and 5. Maintain the temperature for 20 minutes. Add cyclohexanone in a quantity sufficient to obtain a weight of 100%.

Comment: after 30 minutes at T = 200°C the mixture was no longer sticky. After adding component 3 it was heated to T = 160°C and maintained at this temperature for only 5 minutes to prevent the mixture from becoming too viscous.
r)

| | | |
|---|---|---|
| 1 | Dimer acid | 36.4% |
| 2 | AMINE 4 | 9.1% |
| 3 | Epoxy resin | 1.4% |
| 4 | Acetic acid | 4.5% |
| 5 | Cyclohexanone | 48.6% |

Procedure: heat components 1 and 2 to T = 200°C. Maintain this temperature for one hour. Discontinue heating in order to reach the temperature of 140°C. Upon reaching this temperature add component 3. Re-heat to the temperature of 170°C until complete dissolution of the epoxy resin. Discontinue heating until reaching the temperature of 120°C. Upon reaching this temperature add components 4 and 5. Maintain the temperature for 20 minutes. Add cyclohexanone in a quantity sufficient to obtain a weight of 100%.

Comment: component 3 was added at T = 120°C with a portion of the solvent. The addition of components 4 and 5 did not lead to complete dissolution of the resin and consequently a homogeneous solution was not obtained.
s)

| | | |
|---|---|---|
| 1 | Dimer acid | 38.1% |
| 2 | AMINE 2 | 14.3% |
| 3 | Epoxy resin | 1.4% |
| 4 | Acetic acid | 4.8% |
| 5 | Cyclohexanone | 41.4% |

Procedure: heat components 1 and 2 to T = 200°C. Maintain this temperature for one hour. Discontinue heating in order to reach the temperature of 140°C. Upon reaching this temperature add component 3. Re-heat to the temperature of 170°C until complete dissolution of the epoxy resin. Discontinue heating until reaching the temperature of 120°C. Upon reaching this temperature add components 4 and 5. Maintain the temperature for 20 minutes. Add cyclohexanone in a quantity sufficient to obtain a weight of 100%.
t)

| | | |
|---|---|---|
| 1 | Dimer acid | 38.1% |
| 2 | AMINE 2 | 9.5% |
| 3 | Epoxy resin | 1.4% |
| 4 | Acetic acid | 4.8% |
| 5 | Cyclohexanone | 46.2% |

Procedure: heat components 1 and 2 to T = 200°C. Maintain this temperature for one hour. Discontinue heating in order to reach the temperature of 140°C. Upon reaching this temperature add component 3. Re-heat to the temperature of 170°C until complete dissolution of the epoxy resin. Discontinue heating until reaching the temperature of 120°C. Upon reaching this temperature add components 4 and 5. Maintain the temperature for 20 minutes. Add cyclohexanone in a quantity sufficient to obtain a weight of 100%.

Comment: a portion of the solvent was added together with component 3 as the resin was too viscous.

### Example 8

### Use of the resins produced (example 7) to produce a decal paste

Following the method described in example 2 the following results were observed.

**Table 5**

| **Resin solution #** | **P** | **q** | **r** |
|---|---|---|---|
| **Production process** | Standard | Sticky | Standard |
| **Printing properties (120 thread nylon frame)** | Printing homogeneous and not sticky | Printing homogeneous but sticky | Printing homogeneous and not sticky |
| **Drying time (minutes)** | 30 | 30 | 60 |
| **Dissolution in water (control after 30 minutes)** | Does not dissolve | Does not dissolve | Does not dissolve |
| **Elasticity of the decal (assessed during the application step)** | Not Good | Good | Good |
| **Results of firing (T = 780°C)** | Not bright and very dark | Not bright and dark | Bright and yellow |

**Table 6**

| **Resin solution #** | **S** | **t** |
|---|---|---|
| **Production process** | Standard | Standard |
| **Printing properties (120 thread nylon frame)** | Printing homogeneous and not sticky | Printing homogeneous and not sticky |
| **Drying time (minutes)** | 60 | 30 |
| **Dissolution in water (control after 30 minutes)** | Does not dissolve | Does not dissolve |
| **Elasticity of the decal (assessed during the application step)** | Good | Good |
| **Results of firing (T = 780°C)** | Bright and yellow | No adhesion |

In relation to the results indicated above, the following must be stressed.

The parameter relating to the stickiness or lack of stickiness of the resin after treatment at 200°C for one hour is controlled to establish whether the resin can be used to produce decal pastes. Usually, if the resin remains sticky after one hour at 200°C it will cause the formation of sticky decal pastes, which are not easily printable. In some cases, after reaching 200°C the mixture is only initially sticky, i.e. the stickiness disappears during the hour: the resins obtained from this type of mixture can be used to obtain decal pastes that are easily printable.

## Claims

1. Method for preparing a binder composition for a formulation for decals based on precious metals; the method comprises
a first mixing step during which at least one polyamine and at least one dicarboxylic acid are mixed together;
and a second mixing step, which follows the first mixing step and during which an organic acid, which is monocarboxylic C₁-C₄, and an organic solvent are added, so as to obtain the binder composition;
the polyamine and the dicarboxylic acid react to obtain at least one polyaminoamide;
said polyamine having the formula H₂NCH₂RCH₂NH₂, wherein R is selected in the group consisting of: -Ph-, -CH₂CH₂NHCH₂CH₂-; the molar ratio between the dicarboxylic acid and the polyamine is from 1.5:1 to 1:4; the molar ratio between the monocarboxylic acid and the polyamine is from 1:0.8 to 1:1.5; the dicarboxylic acid comprises an acid obtained from the polymerization of a fatty acid.

2. Method according to claim 1, wherein the weight ratio between the dicarboxylic acid and the polyamine is from 2 to 5.

3. Method according to one of the preceding claims, wherein said dicarboxylic acid has a number of carbon atoms from 36 to 72.

4. Method according to one of the preceding claims, wherein the dicarboxylic acid comprises an acid obtained from the polymerization of a fatty acid selected in a group consisting of: oleic, linoleic, linolenic and a combination thereof.

5. Method according to claim 4, wherein said dicarboxylic acid is a mixture comprising 75-85% by weight of the dimer component of the fatty acid with respect to the total weight of said dicarboxylic acid, 15-25% by weight of the trimer component of the fatty acid and/or tetramer of the fatty acid with respect to the total weight of said dicarboxylic acid.

6. Method according to one of the preceding claims, wherein the organic solvent is a polar aprotic solvent; the monocarboxylic acid is acetic acid; the molar ratio between the dicarboxylic acid and the organic solvent is from 1:5 to 1:10.

7. Method according to one of the preceding claims, and comprising an addition step, during which an epoxy resin is added.

8. Method according to claim 7, wherein the epoxy resin is based on bisphenol A.

9. Method according to claim 7 or 8, wherein the weight of the dicarboxylic acid is from 32% to 42% by weight with respect to the total weight of the binder composition; the weight of the amine is from 7% to 16% by weight with respect to the total weight of the binder composition; the weight of the epoxy resin is from 1% to 3% by weight with respect to the total weight of the binder composition; the weight of the monocarboxylic acid is from 2% to 7% by weight with respect to the total weight of the binder composition; the weight of the organic solvent is from 35% to 55% by weight with respect to the total weight of the binder composition.

10. Method according to claim 9, wherein the weight of the epoxy resin is from 1% to 2% by weight with respect to the total weight of the binder composition.

11. Method according to one of claims 7 to 10, wherein the addition step is carried out at a temperature from 100°C to 200°C.

12. Method according to one of the preceding claims, wherein the first mixing step is carried out at a temperature from 170°C to 230°C for a time from 45 min to 1 hour and 15 min; the second mixing step is carried out at a temperature from 100°C to 140°C for a time from 10 to 30 minutes.

13. Method according to one of the preceding claims, wherein the polyamine has the formula H₂NCH₂PhCH₂NH₂; the molar ratio between the dicarboxylic acid and the polyamine being from 1:2.5 to 1:1.5.

14. Method according to one of the preceding claims, wherein the polyamine has the formula H₂NCH₂CH₂CH₂NHCH₂CH₂CH₂NH₂; the molar ratio between the dicarboxylic acid and the polyamine being from 1:1.2 to 1.3:1.

15. Binder composition obtainable with the method of any one of the preceding claims.

16. Formulation for decals based on metals comprising a binder composition according to claim 15.

17. Use of a binder composition according to claim 15 to prepare a formulation for decals based on metals.

18. Use according to claim 17, and comprising a step of mixing at least one organic compound comprising a metal with an organic solvent and the binder composition.

19. Use of a binder composition according to claim 15 for preparing decals.

20. Decal for producing a decoration on a substrate; the decal comprises a backing sheet, a layer for forming the decoration and a coating layer; said layer for forming the decoration comprises a binder composition according to claim 15.

## Patentansprüche

1. Verfahren zur Herstellung einer Bindemittelzusammensetzung für eine Formulierung für Abziehbilder auf Edelmetallbasis, wobei das Verfahren umfasst:
einen ersten Mischschritt, während welchem mindestens ein Polyamin und mindestens eine Dicarbonsäure miteinander vermischt werden;
und einen zweiten Mischschritt, der dem ersten Mischschritt folgt und während welchem eine organische Säure, die eine C₁-C₄ Monocarbonsäure ist, und ein organisches Lösungsmittel hinzugefügt werden, um die Bindemittelzusammensetzung zu erhalten;
wobei das Polyamin und die Dicarbonsäure umgesetzt werden, um mindestens ein Polyaminoamid zu erhalten;
wobei das Polyamin die Formel H₂NCH₂RCH₂NH₂ aufweist, wobei R ausgewählt ist aus der Gruppe, bestehend aus: -Ph-, -CH₂CH₂NHCH₂CH₂-; das Molverhältnis zwischen der Dicarbonsäure und dem Polyamin von 1,5:1 bis 1:4 beträgt; das Molverhältnis zwischen der Monocarbonsäure und dem Polyamin von 1:0,8 bis 1:1,5 beträgt; die Dicarbonsäure eine Säure umfasst, die aus der Polymerisation einer Fettsäure erhalten wurde.

2. Verfahren nach Anspruch 1, wobei das Gewichtsverhältnis zwischen der Dicarbonsäure und dem Polyamin von 2 bis 5 beträgt.

3. Verfahren nach einem der vorstehenden Ansprüche, wobei die Dicarbonsäure eine Anzahl von Kohlenstoffatomen von 36 bis 72 aufweist.

4. Verfahren nach einem der vorstehenden Ansprüche, wobei die Dicarbonsäure eine Säure umfasst, die aus der Polymerisation einer Fettsäure, ausgewählt aus einer Gruppe, bestehend aus: Ölsäure, Linolsäure, Linolensäure und einer Kombination derselben, erhalten wurde.

5. Verfahren nach Anspruch 4, wobei die Dicarbonsäure ein Gemisch, umfassend 75-85 Gew.-% der Dimerkomponente der Fettsäure, bezogen auf das Gesamtgewicht der Dicarbonsäure, 15-25 Gew.-% der Trimerkomponente der Fettsäure und/oder des Tetramers der Fettsäure, bezogen auf das Gesamtgewicht der Dicarbonsäure, ist.

6. Verfahren nach einem der vorstehenden Ansprüche, wobei das organische Lösungsmittel ein polares aprotisches Lösungsmittel ist; die Monocarbonsäure Essigsäure ist; das Molverhältnis zwischen der Dicarbonsäure und dem organischen Lösungsmittel von 1:5 bis 1:10 beträgt.

7. Verfahren nach einem der vorstehenden Ansprüche, weiter umfassend einen Additionsschritt, während welchem ein Epoxidharz hinzugefügt wird.

8. Verfahren nach Anspruch 7, wobei das Epoxidharz auf Bisphenol A basiert.

9. Verfahren nach Anspruch 7 oder 8, wobei das Gewicht der Dicarbonsäure von 32 bis 42 Gew.-%, bezogen auf das Gesamtgewicht der Bindemittelzusammensetzung, beträgt; das Gewicht des Amins von 7 bis 16 Gew.-%, bezogen auf das Gesamtgewicht der Bindemittelzusammensetzung, beträgt; das Gewicht des Epoxidharzes von 1 bis 3 Gew.-%, bezogen auf das Gesamtgewicht der Bindemittelzusammensetzung, beträgt; das Gewicht der Monocarbonsäure von 2 bis 7 Gew.-%, bezogen auf das Gesamtgewicht der Bindemittelzusammensetzung, beträgt; das Gewicht des organischen Lösungsmittels von 35 bis 55 Gew.-%, bezogen auf das Gesamtgewicht der Bindemittelzusammensetzung, beträgt.

10. Verfahren nach Anspruch 9, wobei das Gewicht des Epoxidharzes 1 bis 2 Gew.-%, bezogen auf das Gesamtgewicht der Bindemittelzusammensetzung, beträgt.

11. Verfahren nach einem der Ansprüche 7 bis 10, wobei der Additionsschritt bei einer Temperatur von 100°C bis 200°C durchgeführt wird.

12. Verfahren nach einem der vorstehenden Ansprüche, wobei der erste Mischschritt bei einer Temperatur von 170°C bis 230°C für eine Zeitdauer von 45 min bis 1 Stunde und 15 min durchgeführt wird; der zweite Mischschritt bei einer Temperatur von 100°C bis 140°C für eine Zeitdauer von 10 bis 30 Minuten durchgeführt wird.

13. Verfahren nach einem der vorstehenden Ansprüche, wobei das Polyamin die Formel H₂NCH₂PhCH₂NH₂ aufweist; das Molverhältnis zwischen der Dicarbonsäure und dem Polyamin von 1:2,5 bis 1:1,5 beträgt.

14. Verfahren nach einem der vorstehenden Ansprüche, wobei das Polyamin die Formel H₂NCH₂CH₂CH₂NHCH₂CH₂CH₂NH₂ aufweist; das Molverhältnis zwischen der Dicarbonsäure und dem Polyamin von 1:1,2 bis 1,3:1 beträgt.

15. Bindemittelzusammensetzung, erhältlich mit dem Verfahren nach einem der vorstehenden Ansprüche.

16. Formulierung für Abziehbilder auf Metallbasis, umfassend eine Bindemittelzusammensetzung nach Anspruch 15.

17. Verwendung einer Bindemittelzusammensetzung nach Anspruch 15 zur Herstellung einer Formulierung für Abziehbilder auf Metallbasis.

18. Verwendung nach Anspruch 17 und umfassend einen Schritt des Mischens mindestens einer organischen Verbindung, umfassend ein Metall, mit einem organischen Lösungsmittel und der Bindemittelzusammensetzung.

19. Verwendung einer Bindemittelzusammensetzung nach Anspruch 15 zur Herstellung von Abziehbildern.

20. Abziehbild zur Herstellung eines Dekors auf einem Substrat; wobei das Abziehbild eine Trägerfolie, eine Schicht zur Bildung des Dekors und eine Deckschicht umfasst; wobei die Schicht zur Bildung des Dekors eine Bindemittelzusammensetzung nach Anspruch 15 umfasst.

## Revendications

1. Procédé de préparation d'une composition de liant pour une formulation pour décalcomanies à base de métaux précieux ; le procédé comprenant
une première étape de mélange pendant laquelle au moins une polyamine et au moins un acide dicarboxylique sont mélangés ensemble ;
et une seconde étape de mélange, qui suit la première étape de mélange et pendant laquelle un acide organique, qui est monocarboxylique en C₁ à C₄, et un solvant organique sont ajoutés, de manière à obtenir la composition de liant ;
la polyamine et l'acide dicarboxylique réagissent pour obtenir au moins un polyaminoamide ;
ladite polyamine répondant à la formule H₂NCH₂RCH₂NH₂, dans laquelle R est choisi dans le groupe consistant en : -Ph-, -CH₂CH₂NHCH₂CH₂- ; le rapport molaire entre l'acide dicarboxylique et la polyamine est de 1,5:1 à 1:4; le rapport molaire entre l'acide monocarboxylique et la polyamine est de 1:0,8 à 1:1,5 ; l'acide dicarboxylique comprend un acide obtenu par la polymérisation d'un acide gras.

2. Procédé selon la revendication 1, dans lequel le rapport en poids entre l'acide dicarboxylique et la polyamine est de 2 à 5.

3. Procédé selon l'une des revendications précédentes, dans lequel ledit acide dicarboxylique a un nombre d'atomes de carbone de 36 à 72.

4. Procédé selon l'une des revendications précédentes, dans lequel l'acide dicarboxylique comprend un acide obtenu par la polymérisation d'un acide gras choisi dans un groupe consistant en : oléique, linoléique, linolénique et combinaison de ceux-ci.

5. Procédé selon la revendication 4, dans lequel ledit acide dicarboxylique est un mélange comprenant de 75 à 85 % en poids du composant dimère de l'acide gras par rapport au poids total dudit acide dicarboxylique, de 15 à 25 % en poids du composant trimère de l'acide gras et/ou de tétramère de l'acide gras par rapport au poids total dudit acide dicarboxylique.

6. Procédé selon l'une des revendications précédentes, dans lequel le solvant organique est un solvant aprotique polaire ; l'acide monocarboxylique est l'acide acétique ; le rapport molaire entre l'acide dicarboxylique et le solvant organique est de 1:5 à 1:10.

7. Procédé selon l'une des revendications précédentes, et comprenant une étape d'ajout, pendant laquelle une résine époxy est ajoutée.

8. Procédé selon la revendication 7, dans lequel la résine époxy est à base de bisphénol A.

9. Procédé selon la revendication 7 ou 8, dans lequel le poids de l'acide dicarboxylique est de 32 % à 42 % en poids par rapport au poids total de la composition de liant ; le poids de l'amine est de 7 % à 16 % en poids par rapport au poids total de la composition de liant ; le poids de la résine époxy est de 1 % à 3 % en poids par rapport au poids total de la composition de liant; le poids de l'acide monocarboxylique est de 2 % à 7 % en poids par rapport au poids total de la composition de liant ; le poids du solvant organique est de 35 % à 55 % en poids par rapport au poids total de la composition de liant.

10. Procédé selon la revendication 9, dans lequel le poids de la résine époxy est de 1 % à 2 % en poids par rapport au poids total de la composition de liant.

11. Procédé selon l'une des revendications 7 à 10, dans lequel l'étape d'ajout est réalisée à une température de 100 °C à 200 °C.

12. Procédé selon l'une des revendications précédentes, dans lequel la première étape de mélange est réalisée à une température de 170 °C à 230 °C pendant un temps allant de 45 min à 1 heure et 15 min ; la seconde étape de mélange est réalisée à une température de 100 °C à 140 °C pendant un temps allant de 10 à 30 minutes.

13. Procédé selon l'une des revendications précédentes, dans lequel la polyamine répond à la formule H₂NCH₂PhCH₂NH₂ ; le rapport molaire entre l'acide dicarboxylique et la polyamine étant de 1:2,5 à 1:1,5.

14. Procédé selon l'une des revendications précédentes, dans lequel la polyamine répond à la formule H₂NCH₂CH₂CH₂NHCH₂CH₂CH₂NH₂ ; le rapport molaire entre l'acide dicarboxylique et la polyamine étant de 1:1,2 à 1,3:1.

15. Composition de liant susceptible d'être obtenue par le procédé selon l'une quelconque des revendications précédentes.

16. Formulation pour décalcomanies à base de métaux comprenant une composition de liant selon la revendication 15.

17. Utilisation d'une composition de liant selon la revendication 15 pour préparer une formulation pour décalcomanies à base de métaux.

18. Utilisation selon la revendication 17, et comprenant une étape de mélange d'au moins un composant organique comprenant un métal avec un solvant organique et la composition de liant.

19. Utilisation d'une composition de liant selon la revendication 15, pour préparer des décalcomanies.

20. Décalcomanie pour produire une décoration sur un substrat ; la décalcomanie comprenant une feuille de doublure, une couche pour former la décoration et une couche de revêtement; ladite couche pour former la décoration comprenant une composition de liant selon la revendication 15.
